# EUROPÄISCHE PATENTSCHRIFT

(11) **EP 2 505 977 B1**
(45) Veröffentlichungstag und Bekanntmachung des Hinweises auf die Patenterteilung: **08.03.2017**
(21) Anmeldenummer: 11195842.7
(22) Anmeldetag: 28.12.2011
(51) Int. Cl.: G01K 1/14

(54) **Temperatursensor mit Halteplatte**
Temperature sensor with holding plate
Capteur de température doté d'une plaque de retenue

(30) Priorität: 28.03.2011 DE 202011004481 U
(43) Veröffentlichungstag der Anmeldung: 03.10.2012
(73) Patentinhaber: Türk + Hillinger GmbH, 78532 Tuttlingen (DE)
(72) Erfinder: Schlipf, Andreas, 78532 Tuttlingen (DE)
(74) Vertreter: Westphal, Mussgnug & Partner Patentanwälte mbB

(56) Entgegenhaltungen:
- CH-A5- 689 875
- DE-A1- 1 948 042
- DE-A1- 19 917 066
- DE-A1-102009 000 597
- GB-A- 2 128 743
- US-A1- 2009 296 782

## Beschreibung

Die Erfindung betrifft einen Temperatursensor mit Halteplatte gemäß dem Oberbegriff des Schutzanspruchs 1. Derartige Temperatursensoren werden häufig verwendet, um die oberflächennahe Temperatur von beheizten Bauteilen zu ermitteln. Typischerweise wird dabei ein Sensorelement, das an einer Halteplatte angeordnet ist, in eine Ausnehmung des Bauteils eingeführt und mit einem an der Halteplatte angeordneten Befestigungselement an dem Bauteil befestigt. Zur Versorgung des Sensorelements und/oder zur Auslese von Messergebnissen ist das Sensorelement an eine elektrische Zuleitung angeschlossen, die ausgehend vom Sensorelement durch die Halteplatte hindurch auf deren von dem zu überwachenden Bauteil abgewandten Seite geführt wird und von dort im wesentlichen parallel zum Verlauf der Halteplatte weitergeführt wird.

Im Betrieb solcher Temperatursensoren mit Halteplatte hat sich herausgestellt, dass die elektrische Zuleitung bei dieser Ausgestaltung oftmals einer Knickung ausgesetzt ist, die zu ihrer Beschädigung führen kann. Aus der CH 689 875 A5 ist eine Temperatursensor mit Halteplatte bekannt, bei dem dieser Effekt durch Verwendung einer Halteplatte mit Abschnitten, die in zwei zueinander versetzten Ebenen verlaufen, reduziert wird. Einer der Abschnitte der Halteplatte bildet die Anlagefläche, der andere wird gemeinsam mit der elektrischen Zuleitung von einem Führungselement umschlossen, das dann zur Fixierung der Zuleitung an der Halteplatte verpresst wird.

Bei der dort gelehrten Vorrichtung ergibt sich jedoch das Problem, dass bei ihr eine Bewegung der elektrischen Zuleitung in der Ebene der Halteplatte insbesondere im Bereich des Haltedorns nicht hinreichend sicher ausgeschlossen ist, wodurch erneut eine Belastung der elektrischen Zuleitung bewirkt wird. Darüber hinaus muss das Führungselement relativ groß ausgeführt werden, weil es nicht nur die elektrische Zuleitung, sondern auch einen Abschnitt der Halteplatte umschließen muss, was insbesondere deshalb schlecht mit der eigentlich gewünschten kompakten Bauform zu vereinbaren ist, weil dementsprechend auch größere Knickschutzfedern benötigt werden. Schließlich lässt auch die Effizienz der Fertigung bei diesem Aufbau zu wünschen übrig, denn die optimale Geometrie der Halteplatte ist in der Regel für unterschiedliche zu überwachende Bauteile unterschiedlich. Der bekannte Aufbau des Temperatursensors mit Halteplatte erzwingt aber für jede Variation des Aufbaus der Halteplatte, insbesondere im Hinblick auf deren Dicke, ebenso eine Anpassung des Führungselements an die jeweiligen Gegebenheiten, wie eine Variation der für die elektrischen Zuleitungen verwendeten Werkstoffe und Geometrien, was einer effizienten Fertigung entgegensteht.

Weitere Temperatursensoren mit Halteplatte sind auf der DE 199 17 066 A1, der US 2009/0296782 A1 und der DE 10 2009 000 597 A1 bekannt. Insbesondere offenbart die letztgenannte Druckschrift einen Temperatursensor mit einem Sensorelement, einer Halteplatte mit einer Anlagefläche und mindestens einer elektrischen Zuleitung die ausgehend vom Sensorelement durch eine Öffnung in der Heizplatte geführt ist, wobei auf der der Anlagefläche gegenüberliegenden Seite der Halteplatte ein Führungselement angeordnet ist, durch das die elektrische Zuleitung so hindurchgeführt ist, dass zumindest das dem Sensorelement zugewandte Ende des geführten Abschnitts der elektrischen Zuleitung von jedem Abschnitt der Halteplatte in Richtung senkrecht zur Anlagefläche beabstandet ist und gegen eine Verschiebung in jede Richtung außer den Erstreckungsrichtungen der elektronischen Zuleitung gesichert ist.

Die Aufgabe der Erfindung liegt also darin, einen effizient und kostengünstig zu fertigenden Temperatursensor mit Halteplatte bereitzustellen, dessen Geometrie einfach an die jeweiligen Einbaubedingungen anpassbar ist, der eine kompakte Bauform aufweist und bei dem die elektrische Zuleitung besser gegen Knickung und Verschiebung in der Plattenebene der Halteplatte geschützt ist.

Diese Aufgabe wird gelöst durch einen Temperatursensor mit Halteplatte mit den Merkmalen des Schutzanspruchs 1. Vorteilhafte Ausgestaltungen der Erfindung sind Gegenstand der Unteransprüche.

Der erfindungsgemäße Temperatursensor weist ein Sensorelement, eine Halteplatte mit einer Anlagefläche und mindestens eine elektrische Zuleitung, die ausgehend vom Sensorelement durch eine Öffnung in der Halteplatte geführt ist, auf. Erfindungswesentlich ist, dass auf der Anlagefläche gegenüberliegenden Seite der Halteplatte oder an einer Stirnseite der Halteplatte ein Führungselement angeordnet ist, durch das die elektrische Zuleitung so hindurchgeführt ist, dass zumindest das dem Sensorelement zugewandte Ende des geführten Abschnitts der elektrischen Zuleitung von jedem Abschnitt der Halteplatte in Richtung senkrecht zur Anlagefläche beabstandet ist (was z.B. nicht gegeben ist, wenn dieses Ende des geführten Abschnitts an der Halteplatte anliegt) und gegen eine Verschiebung in jede Richtung außer den Erstreckungsrichtungen der elektrischen Zuleitung gesichert ist. Bevorzugt ist diese Abstandsbedingung auch für das vom Sensorelement abgewandte Ende der elektrischen Zuleitung ebenfalls erfüllt.

Diese Bedingungen sind erfindungsgemäß erfüllt, wenn das Führungselement ein Metallblock ist, der eine Bohrung als Führung aufweist, die den Metallblock parallel zu einer Erstreckungsrichtung der Anlagefläche der Halteplatte durchsetzt und wenn die elektrische Zuleitung durch diese Bohrung geführt ist.

Die derart geführte elektrische Zuleitung kann dann gegebenenfalls noch in zwei Richtungen verschoben werden, nämlich in Richtung auf die Öffnung der Halteplatte hin und von der Öffnung der Halteplatte fort, was verdeutlicht, dass mit einer elektrischen Leitung zwei Erstreckungsrichtungen verbunden sind.

Zur Klarstellung wird explizit darauf hingewiesen, dass der Abstand in Richtung senkrecht zur Anlagefläche Halteplatte zwischen dem geführten Abschnitt der elektrischen Zuleitung und der Halteplatte für unterschiedliche Bereiche des geführten Abschnitts der elektrischen Zuleitung unterschiedlich sein kann. Zwar verläuft vorzugsweise der geführte Abschnitt der elektrischen Zuleitung im Wesentlichen parallel zu einer Erstreckungsrichtung der Anlagefläche der Halteplatte, dies ist aber nicht zwingend erforderlich.

Da das so ausgestaltete Führungselement einen Mindestabstand zwischen der vom zu überwachenden beheizten Bauteil abgewandten Oberfläche der Halteplatte aufweist und dem geführten Bereich der elektrischen Zuleitung vorgibt wird sichergestellt, dass eine Knickung der elektrischen Zuleitung an der Stelle, an der sie die Halteplatte durchsetzt begrenzt ist. Gleichzeitig wird eine Bewegung der elektrischen Zuleitung, die zu einem Scheuern der elektrischen Zuleitung an der Knickstelle führen kann, besonders effektiv vermieden, weil die Öffnung, durch die die elektrische Zuleitung geführt wird, vollständig an deren Durchmesser angepasst werden kann, da kein Abschnitt der Halteplatte mit in diese Öffnung eingeführt werden muss.

Zugleich eröffnet dieser Abstand einerseits die Möglichkeit, eine Fixierung der elektrischen Zuleitung vorzusehen, die nicht auch noch Abschnitte der Halteplatte einschließt, und andererseits die Möglichkeit, eine etwaig vorgesehene Knickschutzfeder mit einem kleineren Radius vorzusehen, was beides zu einer wesentlich kompakteren Bauform beiträgt.

Ferner ist die konkrete Ausgestaltung des Führungselements bei dem erfindungsgemäßen Temperatursensor mit Halteplatte völlig unabhängig von der Halteplattengeometrie, so dass ein identisches Bauteil für alle Ausführungsformen verwendet werden kann, was zu einer besonders effizienten und kostengünstigen Fertigung beiträgt. Auch eine Anpassung an die jeweils gewünschte Ausgestaltung der elektrischen Zuleitung im Hinblick auf deren Form und Verlauf ist leicht durch Anpassung von Verlaufsrichtung und Durchmesser der Bohrung bzw. Nut möglich.

In einer besonders vorteilhaften Ausführungsform des Temperatursensors ist der geführte Abschnitt der elektrischen Zuleitung im Führungselement auch gegen eine Verschiebung in den Erstreckungsrichtungen der elektrischen Zuleitung gesichert. Dies verhindert nicht nur eine erhöhte Belastung der elektrischen Zuleitung an der Kante der Öffnung, durch die es durch die Halteplatte hindurchgeführt wird, sondern vermeidet auch eine wiederholte Veränderung des Knick- oder Biegewinkels an dieser Stelle, die zu Ermüdungsbrüchen der elektrischen Zuleitung führen kann.

Praktisch ist diese Sicherung beispielsweise durch eine Fixierung des geführten Abschnitts möglich, die insbesondere erreichbar ist, wenn der geführte Abschnitt der elektrischen Zuleitung mit einem Isolierschlauch umgeben wird, der den Durchmesser der elektrischen Zuleitung so vergrößert, dass der geführte Abschnitt klemmend im Führungselement geführt ist. Es sind aber auch andere Möglichkeiten denkbar, eine Fixierung herbeizuführen, z.B. durch Verpressen, Verklemmen oder Verkleben.

In einer besonders bevorzugten Variante der Erfindung ist vorgesehen, dass der Abschnitt der elektrischen Zuleitung, der zwischen der Öffnung in der Halteplatte und dem Führungselement verläuft, einen ersten Unterabschnitt aufweist, in dessen Verlauf der Abstand zwischen elektrischer Zuleitung und der Halteplatte Richtung auf das Führungselement hin zunimmt und einen zweiten Unterabschnitt aufweist, in dem der Abstand zwischen elektrischer Zuleitung und der Halteplatte in Richtung auf das Führungselement hin abnimmt. Bei dieser Ausgestaltung ist sichergestellt, dass Knick- und Zugspannungen an der Stelle, an der die elektrische Zuleitung durch die Öffnung in der Halteplatte geführt ist, effizient vermieden werden.

Falls ferner sichergestellt ist, dass der maximale Abstand zwischen elektrischer Zuleitung und Halteplatte geringer ist als die Höhe des Führungselements relativ zur Halteplatte, kann das Führungselement eine zumindest partielle Abschirmung gegen eine mögliche Druckbelastung der elektrischen Zuleitung gewährleisten, die wiederum zu einer Reduktion des Risikos einer Knick-Belastung an der Stelle, an der die elektrische Zuleitung durch die Öffnung in der Halteplatte geführt ist, führt.

Eine weitere vorteilhafte Ausgestaltung des Temperatursensors, die seine Temperaturbeständigkeit und somit auch seine Zuverlässigkeit und Langlebigkeit erhöht, sieht vor, dass die elektrische Zuleitung wenigstens im Bereich zwischen Sensorelement und Führungselement mineralisoliert ist. Insbesondere haben sich in diesem Zusammenhang Temperatursensoren bewährt, bei denen das Sensorelement eine Kontaktstelle von zwei Thermoschenkeln aus unterschiedlichem Material aufweist, die zumindest abschnittsweise in der elektrischen Zuleitung verlaufen und bei denen die elektrische Zuleitung zumindest im Bereich zwischen den Thermoschenkeln mineralisoliert ist.

In einer besonders bevorzugten Ausgestaltung weist der Temperatursensor nach einem vorstehenden Anspruch ein Führungselement mit einem rohrförmig ausgebildeten Fortsatz zum Aufschieben einer Knickschutzfeder auf. Damit wird verhindert, dass beim Austritt aus dem Führungselement Knickbelastungen auf die elektrische Zuleitung wirken.

Exemplarische Ausgestaltungen der Erfindung werden nachfolgend anhand von Figuren näher erläutert. Es zeigen:
- Fig.1:: ein Ausführungsbeispiel der Erfindung und,
- Fig.2:: einen Querschnitt durch das Ausführungsbeispiel aus Figur 1 mit entfernter Knickschutzfeder.

Gleiche Bauteile gleicher Ausführungsformen sind in allen Figuren mit denselben Bezugszeichen versehen.

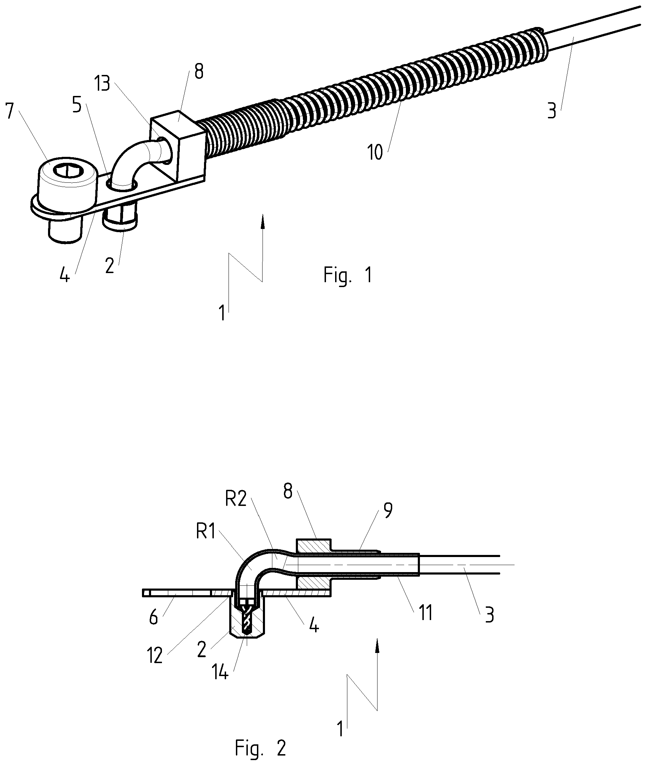

Figur 1 zeigt ein Ausführungsbeispiel für einen Temperatursensor 1 mit Halteplatte 4. Die Halteplatte 4 ist zweckmäßigerweise mit einem Befestigungsmittel, mit dem der Temperatursensor 1 an dem nicht dargestellten Bauteil, dessen Temperatur überwacht werden soll, befestigbar. Als Beispiel für ein solches Befestigungsmittel, das nicht zwingend Bestandteil des Temperatursensors sein muss, zeigt Figur 1 eine Schraube 7, die ein lediglich in Figur 2 sichtbares, in der Halteplatte 4 angeordnetes Langloch 6 durchsetzt und in ein entsprechendes Gewinde des nicht dargestellten Bauteils, dessen Temperatur überwacht werden soll, eingeschraubt werden kann.

Die Halteplatte 4 wird ferner von einer Öffnung 5 durchsetzt, die von der bei Benutzung des Temperatursensors 1 dem zu überwachenden Bauteil zugewandten Seite des Temperatursensors 1, also der Anlagefläche der Halteplatte 4, zur dieser gegenüberliegenden Seite führt. An der bei Benutzung des Temperatursensors 1 dem zu überwachenden Bauteil zugewandten Seite der Öffnung 5 ist ein Sensorelement 2 angeordnet, das durch eine durch die Öffnung 5 hindurchgeführte elektrische Zuleitung 3 mit einer nicht dargestellten Steuer- und/oder Auslesevorrichtung für das Sensorelement verbunden ist.

Auf der Halteplatte 4 ist ein Führungselement 8 angeordnet, das dort beispielsweise verschweißt, verlötet oder verklebt sein kann. Das Führungselement 8 weist, wie man besonders gut in Figur 2 erkennt, eine zentrale Bohrung 13 auf, durch die die elektrische Zuleitung 3 geführt ist, so dass die elektrische Zuleitung 3 im Wesentlichen parallel zu einer Erstreckungsrichtung der Anlagefläche der Halteplatte 4 und von der Halteplatte 4 beabstandet verläuft und gegen eine Verschiebung in jede Richtung außer den Erstreckungsrichtungen der elektrischen Zuleitung 3 gesichert ist.

Insbesondere ist in beiden Figuren klar zu erkennen, dass das dem Sensorelement 2 zugewandte Ende des geführten Abschnitts der elektrischen Zuleitung 3 von jedem Abschnitt der Halteplatte 4 in Richtung senkrecht zur Anlagefläche beabstandet ist. Der Abstand in Richtung senkrecht zur Anlagefläche zwischen dem dem Sensorelement 2 zugewandten Ende des geführten Abschnitts der elektrischen Zuleitung 3 von jedem Abschnitt der Halteplatte 4 ist in Figur 2 zur Verdeutlichung der Bedeutung dieses wesentlichen Merkmals mit dem Bezugszeichen d gekennzeichnet. Die zur Vermeidung von Knickproblemen im sensorelementseitigen Endabschnitt der elektrischen Zuleitung 3 benötigte Niveaudifferenz relativ zum Niveau des am zu überwachenden Bauteil anliegenden Abschnitts der Halteplatte wird also durch das an oder auf der Halteplatte 4 angeordnete Führungselement 8 erreicht, in dem nur die, gegebenenfalls von einem Schrumpfschlauch umgebene, elektrische Zuleitung fixiert wird.

In der in Figuren 1 und 2 dargestellten Ausführungsform der Erfindung ist darüber hinaus ein in Figur 2 erkennbarer Isolationsschlauch 11 vorgesehen, der den Endabschnitt der elektrischen Zuleitung 3 insbesondere im Bereich der Bohrung 13 umgibt und in diesem Bereich eine Klemmwirkung erzeugt, die eine Sicherung auch gegen Verschiebung in Richtung der Erstreckungsrichtungen der elektrischen Zuleitung 3 bewirkt. Als Konsequenz wird ein auf die elektrische Zuleitung 3 auf der dem Sensorelement 3 abgewandten Seite des Führungselements 8 von diesem aufgenommen und führt nicht zu einer Änderung des Verlaufs der elektrischen Zuleitung 3 im Abschnitt zwischen Sensorelement 2 und Führungselement 8.

In der in Figur 1 und 2 dargestellten Ausführungsform weist dieser Abschnitt, wie insbesondere anhand der Figur 2 erkennbar ist, einen ersten Unterabschnitt R1 auf, in dessen Verlauf der Abstand zwischen elektrischer Zuleitung 3 und der Halteplatte 4 in Richtung auf das Führungselement 8 hin zunimmt, und einen zweiten Unterabschnitt R2 auf, in dem der Abstand zwischen elektrischer Zuleitung 3 und der Halteplatte 5 in Richtung auf das Führungselement 8 hin abnimmt. Dadurch kann eine entspannte, knickfreie Führung der elektrischen Zuleitung 3 sichergestellt werden.

Das Führungselement 8 weist ferner, wie besonders gut in Figur 2 zu erkennen ist, auf seiner dem Sensorelement 2 abgewandten Seite einen rohrförmigen Fortsatz 9 auf, an dem eine nur in Figur 1 dargestellte Knickschutzfeder 10 durch Aufschieben befestigt werden kann, um ein Abknicken der elektrischen Zuleitung 3 an ihrem Austritt aus dem Führungselement 8 zu verhindern.

In Figur 2 sind darüber hinaus weitere Details betreffend eine vorteilhafte Anordnung des Sensorelements 2 zu erkennen. Das Sensorelement 2 weist einen verjüngten Bereich 12 auf, mit dem es in die Öffnung 5 der Halteplatte 4 eingeführt ist und der den Durchmesser der Öffnung 5 aufweist. Die mechanische Verbindung zwischen Sensorelement 2 und Halteplatte 4 kann z.B. durch eine Dreipunkt-Laserschweißung erfolgen, es sind aber z.B. auch andere Arten der Verschweißung oder ein Verlöten, Verklemmen, Einschrauben oder Verkleben möglich. Die elektrische Zuleitung 3 mit dem in diesem Ausführungsbeispiel optional vorgesehenen Isolationsschlauch 11 ist durch die Öffnung 5 hindurch und in eine Ausnehmung im Sensorelement 2 eingeführt, in der ein Leiter 14 der elektrischen Zuleitung 3 in elektrischen Kontakt mit dem Sensorelement 2 gebracht ist.

### Bezugszeichenliste

- 1: Temperatursensor
- 2: Sensorelement
- 3: elektrische Zuleitung
- 4: Halteplatte
- 5: Öffnung
- 6: Langloch
- 7: Schraube
- 8: Führungselement
- 9: rohrförmiger Fortsatz
- 10: Knickschutzfeder
- 11: Isolationsschlauch
- 12: verjüngter Bereich
- 13: Bohrung
- 14: Leiter
- R1: erster Unterabschnitt
- R2: zweiter Unterabschnitt
- d: senkrechter Abstand zwischen elektrischer Zuleitung und Halteplatte

## Patentansprüche

1. Temperatursensor (1) mit einem Sensorelement (2), einer Halteplatte (4) mit einer Anlagefläche und mindestens einer elektrischen Zuleitung (3), die ausgehend vom Sensorelement (2) durch eine Öffnung (5) in der Halteplatte (4) geführt ist, wobei auf der der Anlagefläche gegenüberliegenden Seite der Halteplatte (4) oder an einer Stirnseite der Halteplatte (4) ein Führungselement (8) angeordnet ist, durch das die elektrische Zuleitung (3) so hindurchgeführt ist, dass zumindest das dem Sensorelement zugewandte Ende des geführten Abschnitts der elektrischen Zuleitung von jedem Abschnitt der Halteplatte in Richtung senkrecht zur Anlagefläche beabstandet ist und gegen eine Verschiebung in jede Richtung, gegebenenfalls außer den Erstreckungsrichtungen der elektrischen Zuleitung (3), gesichert ist,
**dadurch gekennzeichnet, dass** das Führungselement (8) ein Metallblock mit einer Bohrung ist, durch die der geführte Abschnitt der elektrischen Zuleitung (3) geführt ist.

2. Temperatursensor (1) nach Anspruch 1,
**dadurch gekennzeichnet, dass** der geführte Abschnitt der elektrischen Zuleitung (3) im Führungselement (8) auch gegen eine Verschiebung in den Erstreckungsrichtungen der elektrischen Zuleitung (3) gesichert ist.

3. Temperatursensor (1) nach Anspruch1,
**dadurch gekennzeichnet, dass** der Abschnitt der elektrischen Zuleitung (3), der zwischen der Öffnung (5) in der Halteplatte (4) und dem Führungselement (8) verläuft, einen ersten Unterabschnitt (R1) aufweist, in dessen Verlauf der Abstand zwischen elektrischer Zuleitung (3) und der Halteplatte (4) in Richtung auf das Führungselement (8) hin zunimmt und einen zweiten Unterabschnitt (R2) aufweist, in dem der Abstand zwischen elektrischer Zuleitung (3) und der Halteplatte (5) in Richtung auf das Führungselement (8) hin abnimmt.

4. Temperatursensor (1) nach Anspruch 1 oder 2,
**dadurch gekennzeichnet, dass** der maximale Abstand zwischen elektrischer Zuleitung (3) und der Halteplatte (4) geringer ist als die Höhe des Führungselements (8) relativ zur Halteplatte.

5. Temperatursensor (1) nach einem vorstehenden Anspruch,
**dadurch gekennzeichnet, dass** die elektrische Zuleitung (3) wenigstens im Bereich zwischen Sensorelement (2) und Führungselement (8) mineralisoliert ist.

6. Temperatursensor (1) nach einem vorstehenden Anspruch,
**dadurch gekennzeichnet, dass** das Sensorelement (2) eine Kontaktstelle von zwei Thermoschenkeln aus unterschiedlichem Material aufweist, die zumindest abschnittsweise in der elektrischen Zuleitung (3) verlaufen und dass die elektrische Zuleitung zumindest im Bereich zwischen den Thermoschenkeln mineralisoliert ist.

7. Temperatursensor (1) nach einem vorstehenden Anspruch,
**dadurch gekennzeichnet, dass** das Führungselement (8) einen rohrförmigen Fortsatz (9) zum Aufschieben einer Knickschutzfeder (10) aufweist.

## Claims

1. Temperature sensor (1) having a sensor element (2), a holding plate (4) having a contact surface and at least one electrical supply (3) which is guided from the sensor element (2) through an opening (5) in the holding plate (4), wherein a guide element (8) is arranged on the side of the holding plate (4) which is opposite the contact surface or on a front side of the holding plate (4), through which guide element the electrical supply (3) is guided through in such a way that at least the end of the guided section of the electrical supply facing the sensor element is spaced apart from each section of the holding plate in the direction perpendicular to the contact surface and is secured against shifting in each direction, if necessary, except for the extension direction of the electrical supply (3),
**characterised in that** the guide element (8) is a metal block with a bore hole, through which the guided section of the electrical supply (3) is guided.

2. Temperature sensor (1) according to claim 1,
**characterised in that** the guided section of the electrical supply (3) is also secured in the guide element (8) against shifting in the extension direction of the electrical supply (3).

3. Temperature sensor (1) according to claim 1,
**characterised in that** the section of the electrical supply (3) which runs between the opening (5) in the holding plate (4) and the guide element (8) has a first subsection (R1), in the pathway of which the distance between the electrical supply (3) and the holding plate (4) increases in the direction of the guide element (8) and has a second subsection (R2), in which the distance between the electrical supply (3) and the holding plate (5) decreases in the direction of the guide element (8).

4. Temperature sensor (1) according to claim 1 or 2,
**characterised in that** the maximum distance between the electrical supply (3) and the holding plate (4) is smaller than the height of the guide element (8) in relation to the holding plate.

5. Temperature sensor (1) according to a preceding claim,
**characterised in that** the electrical supply (3) is mineral insulated at least in the region between the sensor element (2) and the guide element (8).

6. Temperature sensor (1) according to a preceding claim,
**characterised in that** the sensor element (2) has a contact position of two temperature sensing arms made from a different material, said temperature sensing arms running in the electrical supply (3) at least in sections, and the electrical supply is mineral insulated at least in the region between the temperature sensing arms.

7. Temperature sensor (1) according to a preceding claim,
**characterised in that** the guide element (8) has a tubular extension (9) for the suspension of an anti-kink spring (10).

## Revendications

1. Capteur de température (1) comprenant un élément capteur (2), une plaque de retenue (4) ayant au moins une surface d'appui et au moins une conduite électrique (3) qui, en partant de l'élément capteur (2) passe au travers d'une ouverture (5) située dans la plaque de retenue (4), capteur de température dans lequel sur le côté de la plaque de retenue (4) opposé à la surface d'appui ou sur la face frontale de la plaque de retenue (4) est monté un élément de guidage (8) au travers duquel passe la conduite électrique (3) de sorte qu'au moins l'extrémité du segment guidé de la conduite électrique tournée vers l'élément capteur soit située à distance de chaque segment de la plaque de retenue dans une direction perpendiculaire à la surface d'appui, et soit protégée à l'encontre d'un déplacement dans chaque direction, le cas échéant excepté dans les directions d'extension de la conduite électrique (3),
**caractérisé en ce que**
l'élément de guidage (8) est un bloc métallique comprenant un perçage au travers duquel passe le segment guidé de la conduite électrique (3).

2. Capteur de température (1) conforme à la revendication 1,
**caractérisé en ce que**
le segment guidé de la conduite électrique (3) est protégé dans l'élément de guidage (8) également à l'encontre d'un déplacement dans les directions d'extension de la conduite électrique (3).

3. Capteur de température (1) conforme à la revendication 1,
**caractérisé en ce que**
le segment de la conduite électrique (3) qui s'étend entre l'ouverture (5) située dans la plaque de retenue (4) et l'élément de guidage (8) comprend un premier sous segment (R1) le long duquel la distance entre la conduite électrique (3) et la plaque de retenue (4) augmente en direction de l'élément de guidage (8) et un second sous-segment (R2) le long duquel la distance entre la conduite électrique (3) et la plaque de retenue (5) diminue en direction de l'élément de guidage (8).

4. Capteur de température (1) conforme à la revendication 1 ou 2,
**caractérisé en ce que**
la distance maximum entre la conduite électrique (3) et la plaque de retenue (4) est plus faible que la hauteur de l'élément de guidage (8) par rapport à la plaque de retenue.

5. Capteur de température (1) conforme à l'une des revendications précédentes,
**caractérisé en ce que**
la conduite électrique (3) est isolée par un composé minéral au moins dans la zone située entre l'élément capteur (2) et l'élément de guidage (8).

6. Capteur de température (1) conforme à l'une des revendications précédentes,
**caractérisé en ce que**
l'élément capteur (2) comporte un emplacement de contact de deux thermo-branches en des matériaux différents qui s'étendent au moins par segments dans la conduite électrique (3), et la conduite électrique (3) est isolée par un composé minéral au moins dans la zone située entre les thermo-branches.

7. Capteur de température (1) conforme à l'une des revendications précédentes,
**caractérisé en ce que**
l'élément de guidage (8) comprend en prolongement tubulaire (9) pour permettre la réception d'un ressort de protection anti-flambage (10).
